# EUROPEAN PATENT SPECIFICATION

(11) **EP 1 582 127 B1**
(45) Date of publication and mention of the grant of the patent: **01.08.2007**
(21) Application number: 04075988.8
(22) Date of filing: 31.03.2004
(51) Int. Cl.: A47J 31/06

(54) **Device for adapting an express coffee machine to the use of coffee single-dose capsules**
Vorrichtung um in einer Espressokaffeemaschine den Gebrauch von Einzelverpackungen zu erlauben
Dispositif permettant d'utiliser des galettes de café préemballées sur une machine a café espresso

(43) Date of publication of application: 05.10.2005
(73) Proprietor: Electrodomesticos Taurus S.L., 25790 Oliana (Lleida) (ES)
(72) Inventor: Trench, Lluis, 25790 Oliana Lleida (ES)
(74) Representative: Gislon, Gabriele

(56) References cited:
- WO-A-96/27316
- WO-A-97/43937

## Description

### Field of the technique

This invention relates to a device for adapting an expresso coffee machine to the use of coffee single dose tablets and, more specifically, to trap in a filtering bowl of the said coffee machine, a coffee single dose tablet.

### Prior art

Different kinds of expresso coffee machines are known some using ground coffee and other pre-packed coffee tablets or cakes. In both cases the machine for preparing expresso coffee typically comprises at least an outlet or hot pressurized water adapted to receive, by means of a tight coupling, generally of the bayonet kind, a bowl-holder in which a filtering bowl is housed which has a perforated bottom provided to contain a dose of coffee, ground in the first case and in the form of a tablet in the second case. For this second case the filtering bowl or a support fastened on it must have a very specific shape to be adapted to the shape of the coffee tablet therefore the use of such tablets in the first kind of coffee machine is unsuitable. In both cases the coffee is obtained by percolating the said hot water through the ground coffee or the coffee tablet contained in the said filtering bowl.

ES-A1011626, ES-A-2112560 and ES-A-1028925 show similar shapes of coffee tablets or cakes of above mentioned kind, basically consisting in containers in porous material housing within them the related ground and compressed coffee or other similar product. Usually the said container has been formed by the junction of two sheets of the said porous material, sealed on their perimeter and defining a central chamber which houses the said ground coffee. The said documents propose different shapes of tablets although they usually have a preferably discoid shape.

ES-A-2112560 also proposes a coffee machine using the said tablets and which is formed of a boiler and a cylinder enclosing a piston and it has a slot at its top to vertically insert one of the said tablets. The machine also comprises stops for locking the tablet in its position.

ES-A-2130888 related to an arrangement of dose support or fixed bowl holder for coffee machines operating with coffee tablets as explained in above background. The proposed arrangement is essentially characterized in that it comprises a fixed wrapping on the coffee machine coinciding with the hot water outlet, a bottom and a body carrying the tablet support.

ES-A-2154399 refers to a device allowing to use, in a coffee machine, in a first mode, ground coffee or in a second mode, pre-packed coffee cakes. For this, the device comprises a series of common elements, such as a glass holder, a filter holding glass and a seat hinged with respect to the glass holder and a series of differentiated elements for each operating mode, which cannot be used jointly one with the other, that is to say, if the coffee machine is used with coffee cakes or tablets, it is necessary to withdraw (if they are placed) the elements necessary to obtain coffee in a conventional way (ground coffee) and to place those necessary for such purpose and vice versa.

WO-A 96/27316 discloses a device for using ground coffee or pre-packaged coffee blocks in a coffee machine, comprising either a releasable spray packing member for ground coffee or a spray recess for pre-packaged coffee block and a filter ladle may be provided as required with either a ground coffee filter or a filter adapter for coffee blocks in order to adapt the machine for a dual use.

### Explanation of the invention

It seems therefore necessary to offer a simpler alternative and therefore a cheaper alternative to the prior art, represented above all by the last document above which makes possible that a same coffee machine indistinctly makes coffee out of bulk ground coffee or out a pre-packed coffee tablets, without it is required to change too much the elements necessary to shift from one operating mode to the other.

This invention proposes a device for adapting an expresso coffee machine to the use of coffee (or other similar product) single dose tablets , the said coffee machine being of the kind which comprises a bowl holder and a body or a filtering bowl to place ground coffee, in a first operation mode and the said tablets being of the kind which comprises, each of them, two sheets of porous material joined to each other on their perimeter and defining a closed chamber and occupied by an amount or dose of ground and compressed coffee between the said two sheets.

The proposed device comprises an annular element which may be introduced within the said filtering bowl above one of the said single dose tablets previously placed in the said filtering bowl, in a second mode, locking it in its interior, the said annular element being shaped so that it channels the water coming from an element having a plurality of perforations, or shower, towards a central area of the said single dose tablet in order that the water crosses only the said closed chamber or part of it, achieving thus that the coffee finally obtained is not mixed with dirty water, which would be what would happen if the water would cross the peripheral areas of the tablet, because there no coffee is available.

### Short explanation of the drawings

The characteristics and advantages above and others of the invention will be more apparent from the description below of a non limiting embodiment with reference to the drawing appended in which:
Fig. 1 is an exploded view showing the device of this invention, a single dose tablet of coffee, a filtering bowl and a bowl holder, in a situation prior to their mounting,
Fig. 2 is an exploded view in perspective of the elements shown in Fig. 1,
Fig. 3 is a plan view of the elements shown in the two preceding figures after the said bowl holder has been introduced;
Fig. 4 is an enlarged cross section of the proposed device together with the rest of the elements shown in the preceding figures, taken through the plane Z-Z of Fig. 3, and
Fig. 5 is a cross section view including the elements shown in Fig. 4 together with part of the coffee machine, after the bowl holder has been coupled on the coffee machine.

### Detailed description of an example of embodiment

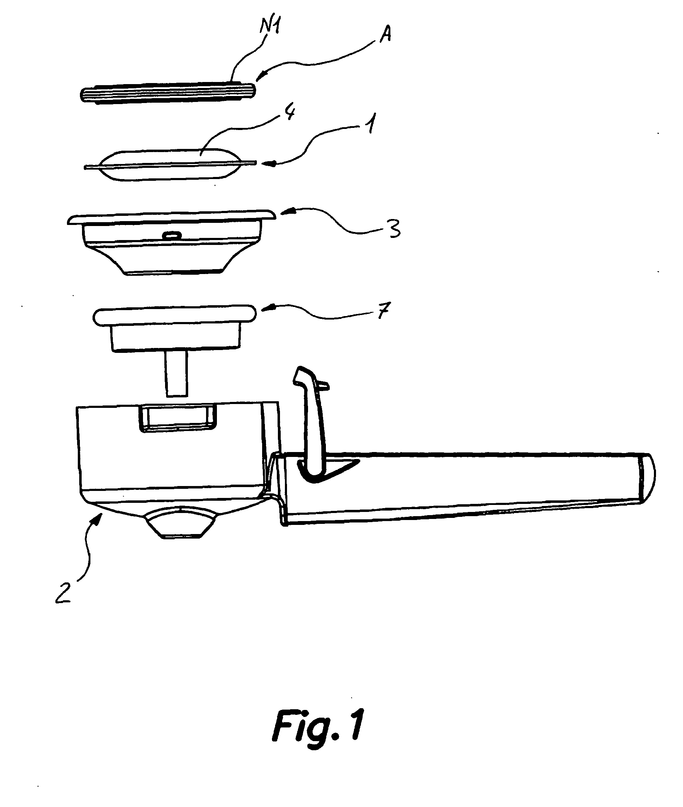

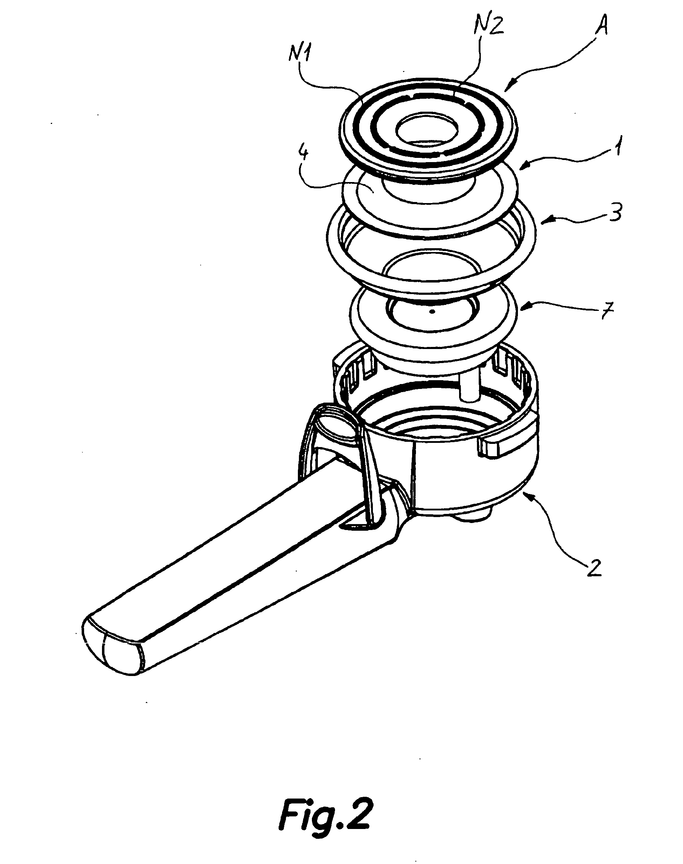

As shown in the figures appended, this invention relates to a device for adapting an expresso coffee machine to the use of single dose tablets 1 of coffee, the said coffee machine being of the kind which comprises a bowl holder 2 and a body or filtering bowl 3 to place ground coffee, in a first operation mode and the said tablets 1 being (see Fig. 1, 2, 4 and 5) of the type which comprise, each, two sheets of porous material joined to each other on their perimeter and defining a closed chamber 4 and occupied by an amount or dose of ground and compressed coffee between the said two sheets.

In the figures, a mouthpiece 7 also is shown between the said bowl holder 2 and the said filtering bowl 3, although for other example of embodiment the said part 7 could be omitted and its function would be carried out by the bowl holder 2 or the filtering bowl itself 3, if they were designed to such aim.

The proposed device comprises an A annular element which can be introduced within the filtering bowl 3 above one of the said single dose tablet 1 previously placed in the filtering bowl 3, in a second operating mode, trapping it within it, the said A annular element being shaped so that it channels the water coming from an element having a plurality of perforations, generally known as a shower 5, towards a central area of the said single dose table 1, in order that the water crosses only the said closed chamber 4 or part of it.

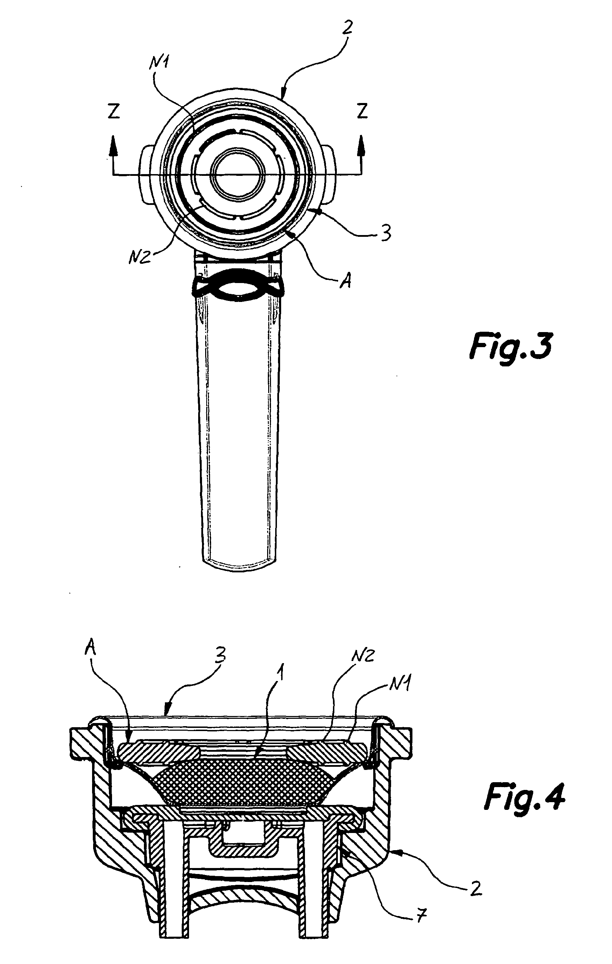

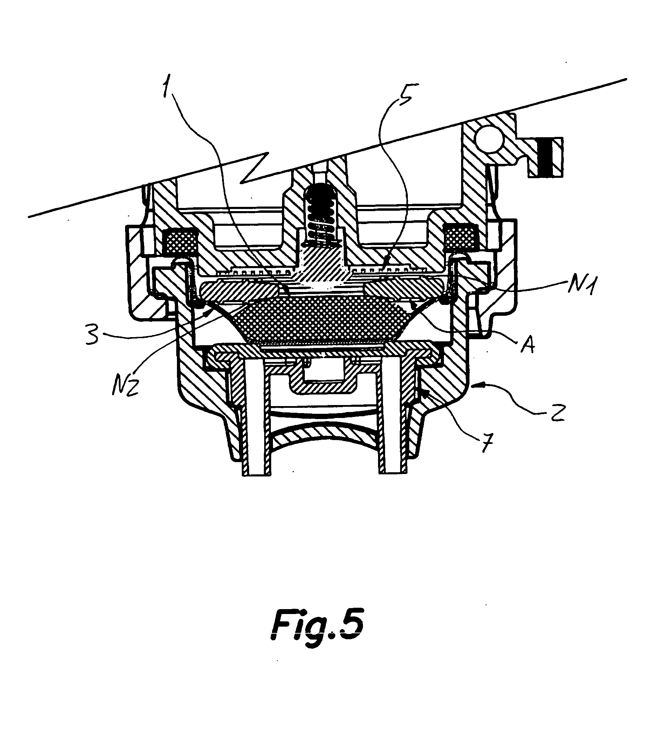

The filtering bowl 3 illustrated in the figures is known as a "cup" due to the amount of ground coffee which can be placed within it. This is the preferred kind of filtering bowl for using with the proposed device of this invention, because its shape contributes to trap the single dose tablet 1 within it. More specifically the internal diameter of the said filtering bowl 3 gradually decreases from an area approximately intermediate down its bottom, defining a seat for the single dose tablet 1 and co-operating with the said A annular element to trap the tablet 1 as it can be clearly seen in Fig. 4 and 5.

To achieve this aim that the water crosses only the closed chamber 4 or part of it of the single dose tablet 1 and that therefore the percolated coffee finally obtained is not mixed with dirty water, the internal diameter of the A annular element is less than the external diameter of the closed chamber 4 of the coffee single dose tablet 1.

To make that the downwards flow of the water easier, the thickness of the said A annular element is gradually decreasing from its external perimeter to its internal perimeter.

The A annular element comprises on at least one of its faces at least a first perimetric rib N1 having a height such that it bumps on the lower face of the said shower 5 when the said bowl holder 2 is coupled to the body of the coffee machine, to co-operate with the said water duct towards the said central area of the single dose tablet 1, preventing that the water radially flows outside. Preferably, the A annular element comprises a second perimetric rib N2 located between the lower perimeter of the A annular element and the said first rib N1, the said second rib N2 being discontinuous in order the water flows through it. The example of a preferred embodiment shown in Fig. 5 comprises the said first and second perimetric ribs N1, N2 on both faces, although they could exist only on one of its faces for other examples of embodiment. The fact that the ribs N1, N2 are arranged on both sides makes that the position in which the A annular element is introduced in the filtering bowl 3 is indistinct.

The cooperation of the two perimetric ribs N1, N2 with the gradual decrease of the thickness of the annular element secures that the water is not shifted from the path wished, that is to say towards the central area of the single dose tablet 1.

Obviously, the A annular element is of a material suitable to be used in contact with food, to meet the health rules set out by many laws.

Preferably, the A annular element is elastic and the said material of which it is made is silicone, which makes its handling easier because of its flexibility, when introducing it in the filtering bowl 3 when it is wished to use the coffee machine with a single dose tablet 1 or to withdraw it from the filtering bowl 3 when it is wished to use ground coffee depositing it directly within the filtering bowl 3.

A man of the art could introduce many changes and modifications to the example of embodiment disclosed without being beyond the scope of the invention as it is defined in the claims appended.

## Claims

1. A device for adapting an expresso coffee machine to the use of coffee single-dose tablets (1), said coffee machine being of the kind comprising an element having a plurality of perforations acting as a shower (5), a bowl holder (2) and a filtering bowl (3) to receive ground coffee, in a first operation mode or one of said single-dose tablets (1) in a second operating mode, said tablets (1) being of the kind each comprising two sheets of porous material joined to each other along their outer perimeter to define a closed chamber (4) occupied by a dose of ground and compressed coffee, said device being **characterized in that** it comprises an annular element (A) to be introduced within the filtering bowl (3) and trapped therein above the single-dose tablet (1) in said second operating mode, said annular element (A) having a thickness gradually decreasing from its external perimeter to its internal perimeter so as to channel the water coming from said shower (5) towards a central area of said single-dose tablet (1), the water crossing only the closed chamber (4) or part of it.

2. Device according to claim 1, wherein the internal diameter of said filtering bowl (3) gradually decreases from an area approximately intermediate down its bottom, defining a seat for the single-dose tablet (1) and co-operating with said annular element (A) to trap the tablet (1).

3. Device according to claim 2, **characterized in that** the annular element (A) comprises on at least one of its faces at least a first perimetric rib (N1) having a height such that it is adapted to bumps on the lower face of said shower (5) when said bowl holder (2) is coupled to the body of the coffee machine, to cooperate with said water duct towards said central area of the single-dose tablet (1), preventing that the water radially flows outside.

4. Device according to claim 3, **characterized in that** the annular element (A) additionally comprises on said at least one face a second perimetric rib (N2) located between the internal perimeter of the annular element (A) and said first rib (N1), said second rib (N2) being discontinuous in order the water flows through it.

5. Device according to claim 4, **characterized in that** said annular element (A) is of a suitable material to be used in contact with food.

6. Device according to claim 5, **characterized in that** said annular element (A) is elastic and said material is silicone.

## Patentansprüche

1. Vorrichtung zur Umrüstung einer Espresso-Kaffeemaschine auf den Einsatz von Kaffee-Einzeldosistabletten (1), wobei die Kaffeemaschine ein Element mit mehreren Lochungen, die als Schauer (5) fungieren, einem Gefäßhalter (2) und einem Filtergefäß (3) zur Aufnahme des gemahlenen Kaffees in einer ersten Betriebsart oder der Einzeldosistabletten (1) in einer zweiten Betriebsart aufweist, wobei die Tabletten (1) so beschaffen sind, dass sie jeweils zwei Lagen aus porösem Material aufweisen, die entlang ihres Außenumfangs unter Bildung einer geschlossenen Kammer (4) miteinander verbunden sind, die jeweils mit einer Dosis aus gemahlenem und gepresstem Kaffee gefüllt ist, wobei die Vorrichtung **dadurch gekennzeichnet ist, dass** sie ein in das Filtergefäß (3) einzuführendes und dort über der Einzeldosistablette (1) in der zweiten Betriebsart festzuhaltendes Ringelement (A) aufweist; wobei das Ringelement (A) eine Dicke aufweist, die von ihrem Außenumfang zu ihrem Innenumfang zunehmend kleiner wird, so dass das von dem Schauer (5) kommende Wasser in Richtung eines Mittelbereichs der Einzeldosistablette (1) geleitet wird, wobei das Wasser lediglich die geschlossene Kammer (4) oder einen Teil davon durchquert.

2. Vorrichtung nach Anspruch 1, wobei der Innendurchmesser des Filtergefäßes (3) von einem in etwa in der Mitte liegenden Bereich nach unten geringer wird, wodurch ein Sitz für die Einzeldosistablette (1) definiert ist und dieser mit dem Ringelement (A) zum Festhalten der Tablette (1) zusammenwirkt.

3. Vorrichtung nach Anspruch 2, **dadurch gekennzeichnet, dass** das Ringelement (A) an mindestens einer ihrer Flächen eine erste Umfangsrippe (N1) mit solch einer Höhe aufweist, dass sie beim Koppeln des Gefäßhalters (2) an den Körper der Kaffeemaschine an die untere Fläche des Schauers (5) stößt und dadurch mit dem Wasserkanal in Richtung des Mittelbereiches der Einzeldosistablette (1) zusammenwirkt, wodurch das Wasser daran gehindert wird, radial nach außen zu fließen.

4. Vorrichtung nach Anspruch 3, **dadurch gekennzeichnet, dass** das Ringelement (A) an der zumindest einen Fläche zusätzlich eine zweite Umfangsrippe (N2) aufweist, die zwischen dem Innenumfang des Ringelements (A) und der ersten Rippe (N1) liegt, wobei die zweite Rippe (N2) unterbrochen ist, damit das Wasser durchfließen kann.

5. Vorrichtung nach Anspruch 4, **dadurch gekennzeichnet, dass** das Ringelement (A) aus einem für Lebensmittelanwendungen geeigneten Material besteht.

6. Vorrichtung nach Anspruch 5, **dadurch gekennzeichnet, dass** das Ringelement (A) elastisch ist und es sich bei dem Material um Silikon handelt.

## Revendications

1. Un dispositif pour adapter une machine à café express à l'utilisation de tablettes de café monodose (1), cette machine à café étant du genre comportant un élément ayant une pluralité de perforations agissant comme un arrosoir (5), un porte-filtre (2) et un filtre (3) pour y recevoir le café moulu dans un premier mode de fonctionnement ou bien une de ces tablettes monodose (1) dans un deuxième mode de fonctionnement, ces tablettes (1) étant du genre comportant deux films en matériau poreux unis entre eux le long de leur périmètre extérieur pour définir une chambre fermée (4) occupée par une dose de café moulu et comprimé, ce dispositif étant **caractérisé en ce qu'**il comporte un élément annulaire (A) à introduire dans le filtre (3) et emprisonné dans celui-ci au-dessus de la tablette monodose (1) dans ce deuxième mode de fonctionnement, cet élément annulaire (A) ayant une grosseur décroissante graduellement de son périmètre externe vers son périmètre interne de façon à acheminer l'eau provenant de cet arrosoir (5) vers une région centrale de cette tablette monodose (1), l'eau ne traversant que la chambre fermée (4) ou une partie de celle-ci.

2. Dispositif conformément à la revendication 1 dans lequel le diamètre interne de ce filtre (3) décroît graduellement depuis une région à peu prés intermédiaire en descendant jusqu'au fond, en définissant une base pour cette tablette monodose (1) et en coopérant avec cet élément annulaire (A) pour emprisonner la tablette (1).

3. Dispositif conformément à la revendication 2, **caractérisé en ce que** l'élément annulaire (A) comporte sur au moins une de ses faces au moins une première nervure périmétrique (N1) ayant une hauteur telle qu'elle est adaptée pour heurter la face inférieure de cet arrosoir (5), lorsque ce porte-filtre (2) est accouplé au corps de la machine à café pour coopérer avec ce tuyau d'eau vers cette région centrale de la tablette monodose (1) en empêchant que l'eau ne s'écoule radialement vers l'extérieur.

4. Dispositif conformément à la revendication 3, **caractérisé en ce que** l'élément annulaire (A) comporte de plus sur cette au moins une face, une deuxième nervure périmétrique (N2) située entre le périmètre interne de l'élément annulaire (A) et cette première nervure (N1), cette deuxième nervure (N2) étant discontinue afin que l'eau coule à travers elle.

5. Dispositif conformément à la revendication 4, **caractérisé en ce que** cet élément annulaire (A) est en un matériau approprié pour être utilisé en contact avec les aliments.

6. Dispositif conformément à la revendication 5, **caractérisé en ce que** cet élément annulaire (A) est élastique et ce matériau est de la silicone.
